# EUROPEAN PATENT APPLICATION

(11) **EP 1 953 502 A2**
(43) Date of publication of application: **06.08.2008**
(21) Application number: 08001721.3
(22) Date of filing: 30.01.2008
(51) Int. Cl.: G01C 21/36, G08G 1/0965, G08G 1/16

(54) **On-vehicle map display apparatus and automotive map display system**

(30) Priority: 30.01.2007 JP 2007019204
(71) Applicant: Xanavi Informatics Corporation, Zama-shi, Kanagawa 228-0012 (JP)
(72) Inventor: Sumizawa, Akio, Zama-shi Kanagawa (JP)
(74) Representative: Beetz & Partner

(57) **Abstract**

The invention relates to an on-vehicle map display apparatus (10) which displays a map at a display monitor (106) and displays a subject vehicle position mark (111) indicating a position of a subject vehicle (1) and a non-subject vehicle position mark (211) indicating a position of a non-subject vehicle (2) on the map. If the subject vehicle position mark and the non-subject vehicle position mark would occupy overlapping positions, the non-subject vehicle position mark is displayed at an offset position.

## Description

The present invention relates to an on-vehicle map display apparatus installed in a vehicle for displaying a map and an automotive map display system that includes the on-vehicle.map display apparatus.

There is an on-vehicle electronic device known in the related art that receives data from another vehicle through vehicle-to-vehicle communication and indicates the position of the other vehicle determined based upon the data on a map on display (Japanese Laid Open Patent Publication No. 2006-64616). There is an issue to be addressed with regard to the on-vehicle electronic device in the related art disclosed in the publication in that if the subject vehicle and the other (non-subject) vehicle are in close proximity to each other, the subj ect vehicle position and the non-subj ect vehicle position indicated on display may overlap and thus be indistinguishable from each other.

An on-vehicle map display apparatus according to the first aspect of the present invention comprises a map display control means for displaying a map at a display monitor, a subject vehicle position detection means for detecting a position of a subject vehicle, a subject vehicle position display control means for displaying on the map a subject vehicle position mark indicating the position of the subject vehicle detected by the subject vehicle position detection means, a non-subject vehicle position information acquisition means for obtaining position information of a non-subject vehicle, a non-subject vehicle position determining means for determining the position of the non-subject vehicle based upon the position information of the non-subject vehicle obtained by the non-subject vehicle position information acquisition means, a non-subject vehicle position display control means for displaying on the map a non-subject vehicle position mark indicating the position of the non-subject vehicle determined by the non-subj ect vehicle position determining means, and/or a proximity decision-making means for making a decision as to whether or not the subject vehicle and the non-subject vehicle are in close proximity to each other, and/or if the proximity decision-making means determines that the subject vehicle and the non-subject vehicle are in close proximity to each other, the non-subj ect vehicle position display control means displays the non-subject vehicle position mark at a position offset from the position of the non-subject vehicle determined by the non-subject vehicle position determining means.

According to the second aspect of the present invention, in the on-vehicle map display apparatus of the first aspect, it is preferable that the on-vehicle map display apparatus further comprises a moving direction and moving distance determining means for determining a moving direction along which the non-subj ect position mark is to be offset and a moving distance over which the non-subject position mark is to be offset by the non-subject vehicle position display control means based upon a positional relationship between the subject vehicle and the non-subject vehicle.

According to the third aspect of the present invention, in the on-vehicle map display apparatus of the second aspect, the moving direction and moving distance determining means may designate a direction along which a straight line connecting the position of the subj ect vehicle and the position of the non-subject vehicle extends as the moving direction.

According to the fourth aspect of the present invention, in the on-vehicle map display apparatus of the second or third aspect, it is preferable that the moving direction and moving distance determining means determines the moving direction and the moving distance so that the subject vehicle position mark and the non-subject vehicle position mark are not displayed at overlapping positions.

According to the fifth aspect of the present invention, in the on-vehicle map display apparatus of any one of the second through fourth aspects, it is more desirable that the moving direction and moving distance determining means determines the moving distance based upon a scaling factor of the map and a size of the subject vehicle position mark displayed on a screen.

According to the sixth aspect of the present invention, the on-vehicle map display apparatus of any one of the first through fifth aspects may further comprise a setting means for setting a proximity decision-making range by which the proximity decision-making means makes a decision as to whether or not the subject vehicle and the non-subject vehicle are in close proximity to each other based upon a scaling factor of the map and a size of the subject vehicle position mark displayed on a screen.

According to the seventh aspect of the present invention, the on-vehicle map display apparatus of any one of the first through sixth aspects further comprises a grade separation decision-making means for making a decision as to whether or not a road on which the subject vehicle is traveling and a road on which the non-subject vehicle is traveling approach each other with a grade separation. In this on-vehicle map display apparatus, when the proximity decision-making means determines that the subject vehicle and the non-subject vehicle are in close proximity to each other and the grade separation decision-making means determines that the road on which the subject vehicle is traveling and the road on which the non-subject vehicle is traveling approach each other with a grade separation, it is preferable that the non-subject vehicle position display control means displays the non-subject vehicle position mark in correspondence to the position of the non-subj ect vehicle determined by the non-subj ect vehicle position determining means.

According to the eighth aspect of the present invention, in the on-vehicle map display apparatus of any one of the first through seventh aspects, it is desirable that the non-subject vehicle position information acquisition means obtains the position information of the non-subject vehicle through communication carried out between the subject vehicle and the non-subject vehicle.

An automotive map display system according to the ninth aspect of the present invention comprises the on-vehicle map display apparatus of any of the first through eighth aspects and a distribution center connected with the on-vehicle map display apparatus through wireless communication, and the non-subject vehicle position information acquisition means obtains the position information of the non-subject vehicle from the distribution center.

According to the tenth aspect of the present invention, it is preferable that the automotive map display system of the ninth aspect further comprises a communication control device that transmits position information of the subject vehicle to the distribution center.

An on-vehicle map display apparatus according to the eleventh aspect of the present invention displays a map at a display monitor, and displays a subject vehicle position mark indicating a position of a subject vehicle and a non-subject vehicle position mark indicating a position of a non-subject vehicle on the map. At this time, if the subject vehicle position mark and the non-subject vehicle position mark would occupy overlapping positions, the non-subject vehicle position mark is displayed at an offset position.

### BRIEF DESCRIPTION OF THE DRAWINGS

FIG. 1 shows the configuration of the vehicle control system achieved in a first embodiment of the.present invention;
FIG. 2 is a block diagram of the navigation apparatus;
FIG. 3 presents a flowchart of the processing executed to display a subject vehicle position mark and a non-subject vehicle position mark on the map;
FIGS. 4A and 4B each present an example of a proximity decision-making range;
FIGS. 5A and 5B each present an example of a map screen displaying the subject vehicle position mark and the non-subject vehicle position mark; and
FIG. 6 shows the configuration of the vehicle control system achieved in a second embodiment of the present invention.

### DESCRIPTION OF PREFERRED EMBODIMENTS

### - First Embodiment -

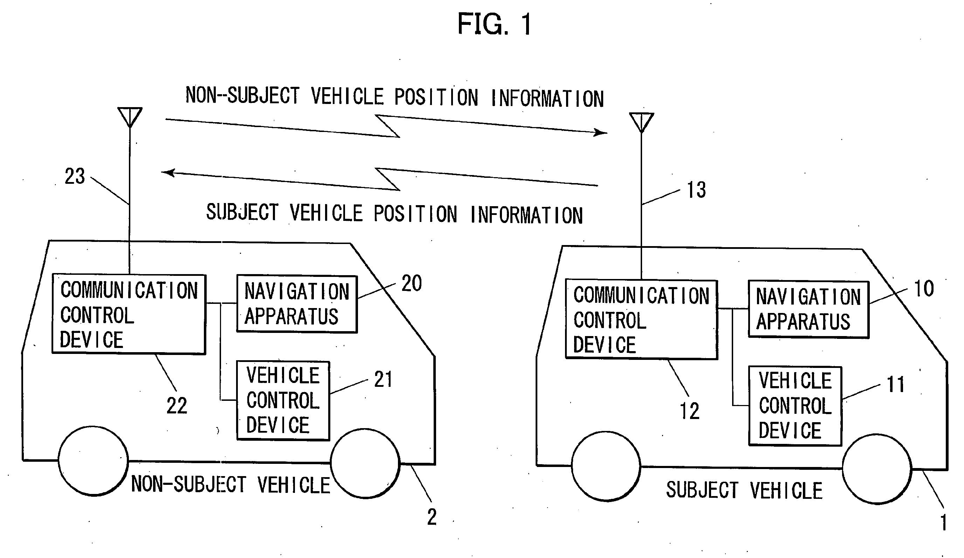

An example of the on-vehicle map display apparatus according to the present invention is now explained in reference to the first embodiment. In a vehicle control system configured as shown in FIG. 1, a subject vehicle 1 and a non-subject vehicle 2 exchange position information indicating their positions through vehicle-to-vehicle communication. Based upon the exchanged position information, the subject vehicle 1 and the non-subject vehicle 2 each determine the traveling state of the other vehicle and execute various types of vehicle control as necessary. A navigation apparatus 10, a vehicle control device 11, a communication control device 12 and an antenna 13 are installed in the subject vehicle 1. Likewise, a navigation apparatus 20, a vehicle control device 21, a communication control device 22 and an antenna 23 are installed in the non-subject vehicle 2.

The navigation apparatus 10 brings up a display of a map over a predetermined range around the subject vehicle 1 at a display monitor. The navigation apparatus 10 displays a subject vehicle position mark indicating the position of the subject vehicle 1 on the map as well. In addition, based upon the non-subject vehicle position information received at the communication control device 12, the navigation apparatus 10 determines the position of the non-subject vehicle 2 and displays a non-subject vehicle position mark indicating its position on the map. Through this map display, the navigation apparatus 10 keeps the user abreast of the positional relationship between the subject vehicle 1 and the non-subject vehicle 2. The navigation apparatus 10 also outputs a warning sound or displays a warning message in response to an instruction from the vehicle control device 11. The warning sound or the warning message thus provided alerts the user to, for instance, the presence of the non-subject vehicle 2 traveling toward the subject vehicle 1.

In addition, as the user sets a destination, the navigation apparatus 10 executes navigation processing so as to guide the subject vehicle 1 to the destination. Namely, as a destination is set for the navigation apparatus 10 through a user operation, the navigation apparatus 10 searches for a recommended route to the destination based upon map data. It then indicates the recommended route resulting from the search on the map and provides the user with instructions with regard to the advancing direction along the recommended route. The navigation apparatus 10 thus guides the subject vehicle 1 to the destination. It is to be noted that the subject vehicle position mark and the non-subject vehicle position mark are also displayed on the map as described earlier while the navigation apparatus 10 guides the subject vehicle 1 to the destination.

In correspondence to the behavior of the subj ect vehicle 1, driving operation performed by the user and the like, the vehicle control device 11 controls various operations executed in the subject vehicle 1. For instance, it controls the acceleration of the subject vehicle 1 by adjusting the throttle opening degree based upon the extent to which the accelerator pedal is depressed, the engine speed or the like. The vehicle control device 11 makes a judgment with regard to the positional relationship between the subj ect vehicle 1 and the non-subj ect vehicle 2 and any change in the positional relationship based upon the subject vehicle position detected by the navigation apparatus 10 and the non-subject vehicle position determined by the navigation apparatus 10. Based upon the judgment results, the vehicle control-device 11 issues a warning instruction to the navigation apparatus 10 or executes drive control for the subject vehicle 1 as necessary. For instance, if the vehicle control device 11 judges that the non-subject vehicle 2 traveling on the road intersecting the road on which the subject vehicle 1 is currently traveling has entered a predetermined distance range from the subject vehicle 1, the vehicle control device 11 issues an instruction for the navigation apparatus 10 to output a warning indicating that the non-subject vehicle 2 is approaching. In addition, it controls the brakes in the subject vehicle 1 to stop the subject vehicle 1 if necessary.

The communication control device 12 performs vehicle-to-vehicle communication with the communication control device 22 installed in the non-subject vehicle 2 via the antenna 13. Through the vehicle-to-vehicle communication, the communication control device 12 receives the non-subject vehicle position information indicating the position of the non-subject vehicle 2 and transmits the subject vehicle position information indicating the position of the subject vehicle 1. It is to be noted that the subject vehicle position information and the non-subject vehicle position information exchanged through the vehicle-to-vehicle communication each include vehicle type information indicating the vehicle type (e.g., a large vehicle, a small vehicle or a motorcycle) and vehicle ID information used to identify the vehicle engaged in the vehicle-to-vehicle communication. The subject vehicle 1 and the non-subject vehicle 2 thus exchange position information.

The non-subject vehicle position information received by the communication control device 12 is output from the communication control device 12 to the navigation apparatus 10. Based upon the non-subject vehicle position information, the navigation apparatus 10 determines the position of the non-subject vehicle 2 as explained earlier and then outputs the results to the communication control device 12. As the determined non-subject vehicle position is thus output from the navigation apparatus 10, the communication control device 12 controls the subject vehicle 1 as explained earlier based upon the non-subject vehicle position. It is to be noted that the vehicle-to-vehicle communication carried out between the subject vehicle 1 and the non-subject vehicle 2 via the communication control devices 12 and 22 may be executed by adopting, for instance, a DSRC (Dedicated Short Range Communication) method.

The navigation apparatus 10, the vehicle control device 11, the communication control device 12 and the antenna 13 installed in the subject vehicle 1 perform the processing and the operations described above. It is to be noted that the navigation apparatus 20, the vehicle control device 21, the communication control device 22 and the antenna 23 installed in the non-subject vehicle 2 also perform similar processing and operations.

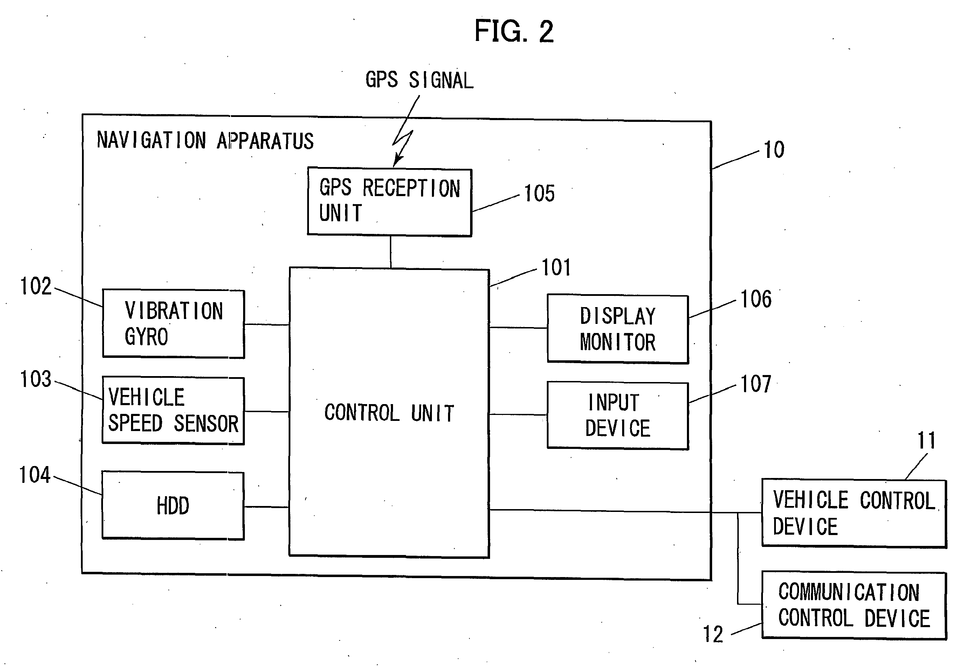

FIG. 2 shows the structure adopted in the navigation apparatus 10. The navigation apparatus 10 includes a control unit 101, a vibration gyro 102, a vehicle speed sensor 103, a hard disk (HDD) 104, a GPS reception unit 105, a display monitor 106 and an input device 107.

The control unit 101 is constituted with amicroprocessor, various peripheral circuits, a RAM, a ROM and the like. Based upon a control program and map data recorded in the HDD 104, the control unit 101 executes various types of processing. For instance, it executes destination search processing to set a destination, recommended route search processing to search for a recommended route to a destination that has been set, subject vehicle position detection processing, various types of image display processing, route guidance processing and the like.

The control unit 101 is connected with the vehicle control device 11 and the communication control device 12. The control unit 101 exchanges various signals and data with the vehicle control device 11 and the communication control device 12. For instance, the subject vehicle position information indicating the subject vehicle position detected by the control unit 101 is output to the communication control device 12 over predetermined time intervals. This subject vehicle position information is transmitted from the subject vehicle 1 to the non-subject vehicle 2 through the vehicle-to-vehicle communication executed by the communication control device 12. The non-subject vehicle position information received from the non-subject vehicle 2 is input from the communication control device 12 to the control unit 101.

Based upon the non-subj ect vehicle position information input from the communication control device 12, the control unit 101 determines the position of the non-subject vehicle 2. At this time, the control unit 101 distinguishes the road on which the non-subject vehicle 2 is currently traveling in the map through map matching executed based upon the non-subject vehicle position information and the map data recorded in the HDD 104, and then determines the position of the non-subject vehicle 2 by reflecting the position of the distinguished road. The non-subject vehicle position thus determined is output, together with the subject vehicle position detection results, to the vehicle control device 11 from the control unit 101. The vehicle control device 11 makes a judgment with regard to the positional relationship between' the subject vehicle 1 and the non-subject vehicle 2 and any change occurring in the positional relationship based upon the detected subject vehicle position and the determined non-subject vehicle position output from the control unit 101, and issues a warning instruction or executes drive control as necessary, as explained earlier.

The vibration gyro 102 is a sensor that detects the angular speed of the subj ect vehicle 1. The vehicle speed sensor 103 detects the vehicle speed of the subject vehicle 1. By detecting the state of movement of the subject vehicle 1 via these sensors over predetermined time intervals, the extent of displacement of the subject vehicle 1 is ascertained and then, based upon the extent of displacement, the current position of the subject vehicle 1 is detected.

The HDD 104 is a nonvolatile recording medium that allows data overwrite. Various types of data including the map data are recorded in the HDD 104. The map data recorded in the HDD 104 are read out as needed under control executed by the control unit 101 and the map data thus read out are utilized in various types of processing and control executed by the control unit 101. The map data include route calculation data, route guidance data, road data and background data. The route calculation data are used when searching for a route to the destination. The route guidance data, which are used when providing guidance for the subject vehicle 1 to the destination along the route having been set, indicate intersection names, road names and the like. The road data indicate road shapes and road types. The background data indicate the shapes of objects in the map other than the roads, such as rivers and railways, the positions of various types of facilities and the like.

The GPS reception unit 105 receives GPS signals transmitted from GPS satellites and then outputs the received GPS signals to the control unit 101. The GPS signals contain information indicating the position of the GPS satellites having transmitted the signals and the transmission time to be used to determine the position of the subject vehicle 1 and the current time. As GPS signals from at least a specific number of GPS satellites are received at the GPS reception unit 105, the control unit 101 is able to calculate the current position of the subject vehicle 1 and the current time based upon the information indicating the GPS satellite positions and the transmission times included in the GPS signals received at the GPS reception unit 105.

The display monitor 106 displays various screens in the navigation apparatus 10, which may be constituted with a liquid crystal display. As explained earlier, display monitor 106 displays a map of an area around the subject vehicle 1, and it also displays the subject vehicle position mark and the non-subject vehicle position mark on the map. The contents of the screen displayed at the display monitor 106 are determined through screen display control executed by the control unit 101. The display monitor 106 is installed at a position at which the display can be viewed with ease by the user, e.g., on the dashboard or inside the instrument panel in the subject vehicle 1.

The input device 107, at which the user performs various input operations to engage the navigation apparatus 10 in operation, includes various input switches. By operating this input device 107, the user is able, for instance, to input to the navigation apparatus 10 the name or the like of a facility -or a geographical point to be set as the destination, select a destination from pre-registered locations or scroll the map along a desired direction. The input device 107 may be constituted with an operation panel or a remote control unit. Alternatively, the input device 107 may be a touch panel constituting an integrated part of the display monitor 106.

As the destination is set by the user via the input device 107, the navigation apparatus 10 searches for a recommended route to the destination by executing an arithmetic operation with a specific algorithm based upon the route calculation data mentioned earlier. It then detects the current position of the subject vehicle 1, brings up on display a roadmap of an area around the current position and guides the subject vehicle 1 to the destination along the recommended route obtained through the search.

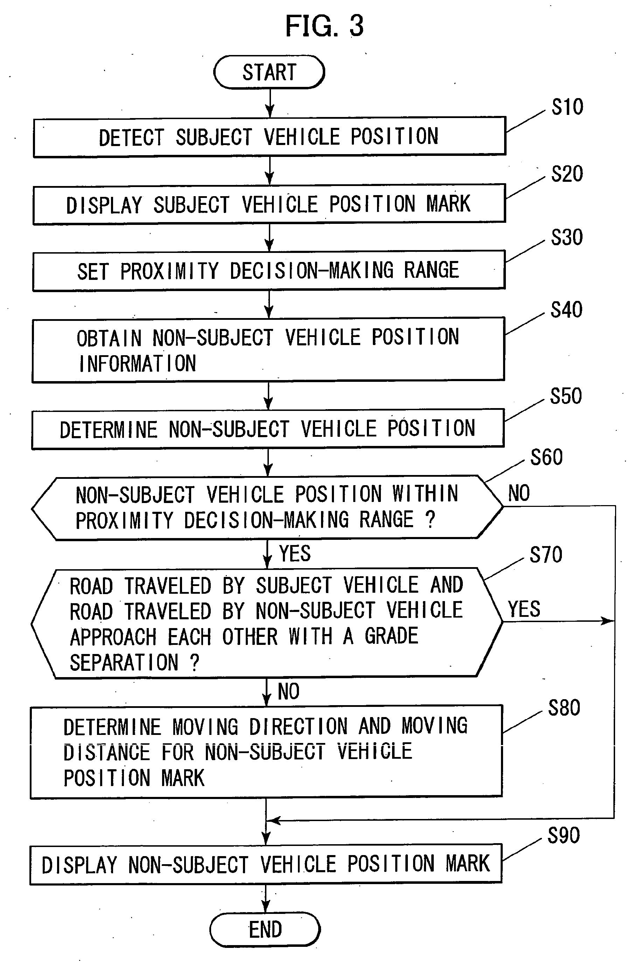

Next, the processing executed to bring up on display the subject vehicle position mark and the non-subject vehicle position mark on the map is explained in reference to the flowchart presented in FIG. 3. The processing in this flowchart is executed over specific processing cycle intervals by the control unit 101 of the navigation apparatus 10 to display the subject vehicle position mark and the non-subject vehicle position mark on the map.

In step S10, the control unit 101 detects the subject vehicle position. In this step, the position of the subject vehicle 1 is detected based upon the detection results provided from the vibration gyro 102 and the vehicle speed sensor 103 as explained earlier. It is to be noted that the control unit 101 distinguishes the road on which the subject vehicle 1 is currently traveling in the map through map matching executed based upon the map data recorded in the HDD 104 and detects the subject vehicle position by reflecting the position of the distinguished road. As a result, the subject vehicle position is corrected in conformance to the road on which the subject vehicle 1 is traveling. In the following step S20, the control unit 101 displays the subject vehicle position mark on the map displayed at the display monitor 106 based upon the subject vehicle position having been detected in step S10.

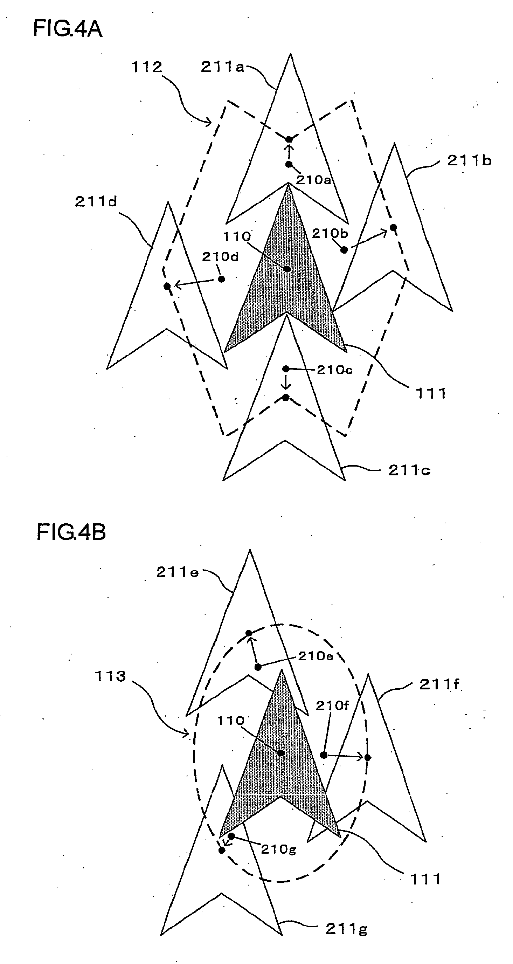

In step S30, the control unit 101 sets a proximity decision-making range to be used as a criterion when making a decision as to whether or not the non-subject vehicle 2 has moved close to the subj ect vehicle 1, around the subj ect vehicle position mark having been displayed in step S20. FIGS. 4A and 4B each presents an example of the proximity decision-making range that may be set in this step. A proximity decision-making range 112 indicated by the dotted line in FIG. 4A has a specific shape so as to ensure that the subject vehicle position mark and the non-subject vehicle position mark do not overlap each other. A proximity decision-making range 113 indicated by the dotted line in FIG. 4B, on the other hand, has an elliptical shape substantially centered on the subject vehicle position 110. It is to be noted that the subject vehicle position mark and the non-subject vehicle position mark may sometimes partially overlap if the proximity decision-making range 113 is set.

In step S30, the control unit 101 sets the proximity decision-making range described above in correspondence to the subject vehicle position mark. At this time, the size of the proximity decision-making range to be set is adjusted in correspondence to the scaling factor of the map on display at the display monitor 106. More specifically, when the map is displayed at a small scaling factor and thus the value obtained by converting the size of the subject vehicle position mark displayed on the screen to a distance in the map is relatively large, the proximity decision-making range is set over a larger area. In contrast, when the map is displayed at a large scaling factor and thus the value obtained by converting the size of the subject vehicle position mark displayed on the screen to a distance in the map is relatively small, a smaller area is set for the proximity decision-making range. In short, the control unit 101 sets the proximity decision-making range in step S30 based upon the map scaling factor and the size of the subject vehicle position mark on the screen.

In step S40, the control unit 101 obtains the non-subject vehicle position information. In this step, the non-subject vehicle position information is obtained through the vehicle-to-vehicle communication carried out between the subject vehicle 1 and the non-subject vehicle 2 via the communication control-device 12. The non-subject vehicle position information received at the communication control device 12 in this step is input to the control unit 101.

In step S50, the control unit 101 determines the non-subject vehicle position based upon the non-subject vehicle position information obtained in step S40. In this step, the control unit 101 distinguishes the road on which the non-subject vehicle 2 is traveling in the map through map matching executed based upon the non-subject vehicle position information having been obtained as described above and the map data recorded in the HDD 104, and then determines the position of the non-subject vehicle 2 by reflecting the position of the distinguished road. As a result, the non-subject vehicle position is corrected in conformance to the road on which the non-subject vehicle 2 is traveling.

In step S60, the control unit 101 makes a decision as to whether or not the non-subject vehicle position determined in step S50 is within the proximity decision-making range set in step S30. If the non-subject vehicle position is judged to be within the proximity decision-making range, the operation proceeds to the next step S70. If, on the other hand, the non-subject vehicle position is determined to be outside the proximity decision-making range, the operation proceeds to step S90 without executing the processing in steps S70 and S80. By making a decision as to whether or not the non-subject vehicle position is within the proximity decision-making range as described above, a decision as to whether or not the non-subject vehicle 2 has moved close to the subject vehicle 1 can be made.

If the operation proceeds from step S60 to step S70, the control unit 101 makes a decision in step S70 as to whether or not the road on which the subject vehicle 1 is traveling and the road on which the non-subject vehicle 2 is traveling approach each other with a grade separation. At this time, the road on which the subject vehicle 1 is traveling and the road on which the non-subject vehicle 2 is traveling are respectively determined based upon the results of the map matching executed to detect the subject vehicle position in step S10 and the results of the map matching executed to determine the non-subject vehicle position in step S50. Then, a decision is made as to whether or not these roads being traveled on by the vehicles approach each other with a grade separation within the range of the map on display at the display monitor 106. The control unit 101 thus ascertains whether or not the roads approach each other with a grade separation.

If it is decided in step S70 that the road on which the subject vehicle 1 is traveling and the road on which the non-subject vehicle 2 is traveling approach each other with a grade separation, the control unit 101 proceeds to step S90 without executing the next step S80. Namely, overlapping display of the subject vehicle position mark and the non-subject vehicle position mark does not give rise to any problem as long as the road on which the subject vehicle 1 is traveling and the road on which the non-subject vehicle 2 is traveling approach each other with a grade separation. This means that there is no need to display the non-subject vehicle position mark at an offset position, and accordingly, the operation proceeds to step S90 without executing step S80. If, on the other hand, it is decided in step S70 that the road on which the subject vehicle 1 is traveling and the road on which the non-subject vehicle 2 is traveling do not approach each other with a grade separation, the operation proceeds to the next step S80.

If the operation proceeds from step S70 to step S80, the control unit 101 determines a moving direction for the non-subj ect vehicle position mark along which the non-subj ect vehicle position mark is to move and a moving distance for the non-subject vehicle position mark over which the non-subject vehicle position mark is to move, in order to display in the following step S90 the non-subject vehicle position mark at an offset position. A specific method that may be adopted to determine the moving direction and the moving distance is explained in detail later. Once the moving direction and the moving distance for the non-subject vehicle position mark are determined in step S80, the operation proceeds to step S90.

In step S90, the control unit 101 displays the non-subject vehicle position mark on the map displayed at the display monitor 106 in correspondence to the non-subject vehicle position determined in step S50. If the moving direction and the moving distance for the non-subj ect vehicle position mark have been determined in step S80 as described above, the non-subject vehicle position mark is displayed at a position offset from the non-subject vehicle position based upon the moving direction and the moving distance. If, on the other hand, the operation has proceeded to step S90 without executing step S80, the non-subject vehicle position mark is displayed at the non-subject vehicle position.

Once the processing in step S90 is executed, the control unit 101 ends the processing in the flowchart presented in FIG. 3. As the processing described above is executed, the subject vehicle position mark and the non-subject vehicle position mark are displayed on the map at the navigation apparatus 10.

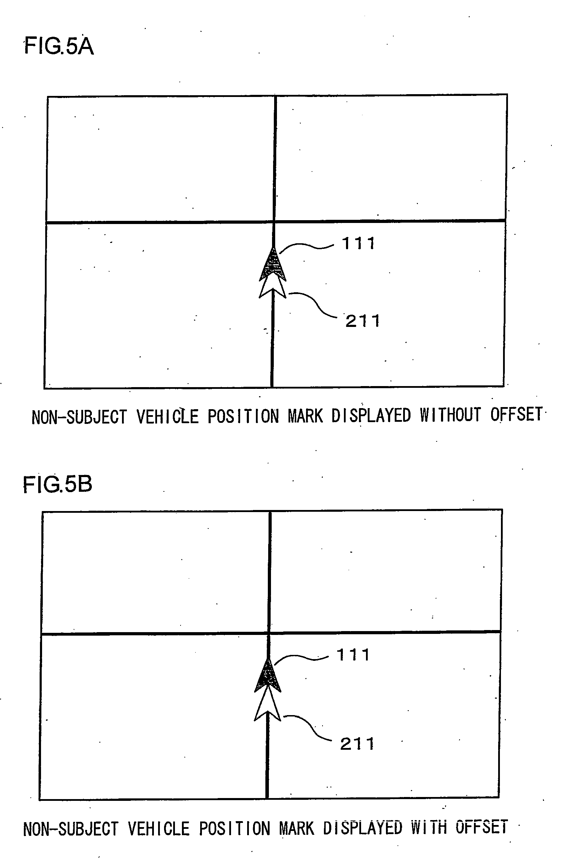

FIGS. 5A and 5B each present an example of a map screen in which the subject vehicle position mark and the non-subject vehicle position mark are displayed. FIG. 5A presents an example of a map screen without offsetting a non-subject vehicle position mark 211 when a subj ect vehicle position mark 111 and the non-subject vehicle position mark 211 would assume overlapping positions. FIG. 5B, on the other hand, presents an example of a map screen with offsetting the non-subject vehicle position mark 211 through the method described above when the subject vehicle position mark 111 and the non-subject vehicle position mark 211 would otherwise assume overlapping positions. In the map screen shown in FIG. 5B, the non-subject vehicle position mark 211 corresponding to the non-subject vehicle 2 traveling behind the subject vehicle 1 is displayed at an offset position so as to ensure that the subject vehicle position mark 111 and the non-subject vehicle position mark 211 will not overlap each other. In this case, the positional relationship between the subj ect vehicle 1 and the non-subject vehicle 2 can be indicated clearly on the map.

Next, in reference to the examples presented in FIGS. 4A and 4B, a method that may be adopted when determining the moving direction and the moving distance for the non-subject vehicle position mark in step S80 is explained. In reference to the example presented in FIG. 4A, a method adopted to determine moving directions and moving distances for non-subject vehicle position marks 211a, 211b, 211c and 211d corresponding to non-subject vehicle positions 210a, 210b, 210c and 210d within the proximity decision-making range 112 is explained.

In FIG. 4A, the subject vehicle position mark 111 is displayed in correspondence to the subject vehicle position 110 and the proximity decision-making range 112 is set in correspondence to the subject vehicle position mark 111. If the non-subject vehicle position marks 211a through 211d were displayed at the non-subject vehicle positions 210a through 210d, which are all within the proximity decision-making range 112, the non-subj ect vehicle position marks 211a through 211d would overlap the subject vehicle position mark 111. Accordingly, the moving directions and the moving distances for the non-subject vehicle position marks 211a through 211d are determined as described below so as not to display the non-subject vehicle position marks 211a through 211d over the subject vehicle position mark 111.

First, straight lines each connecting the subject vehicle position 110 with a specific non-subject vehicle position among the non-subject vehicle positions 210a through 210d are drawn on the map and the directions along which the individual straight lines extend are determined. The directions thus determined in correspondence to the individual non-subject vehicle positions 210a through 210d are then designated as the moving directions for the non-subject vehicle position marks 211a through 211d. Next, the distances from the non-subject vehicle positions 210a through 210d to the outer periphery of the proximity decision-making range 112 along these moving directions are each determined. The distances thus determined in correspondence to the individual non-subject vehicle positions 210a through 210d are designated as the moving distances for the non-subject vehicle position marks 211a through 211d. Through this operation, the moving directions and the moving distances for the non-subj ect vehicle position marks 211a through 211d can be determined so that the subject vehicle position mark 111 and the non-subject vehicle position marks 211a through 211d do not overlap each other.

Once the moving directions and the moving distances for the non-subject vehicle position marks 211a through 211d are determined as described above, the non-subject vehicle positions 210a through 210d are moved in step S90 in correspondence to the moving directions and the moving distances, as shown in FIG. 4A. Then, the non-subject vehicle position marks 211a through 211d are brought up on display on the map in correspondence to the non-subject vehicle positions 210a through 210d having been moved. Under circumstances in which the non-subj ect vehicle position marks 211a through 211d would overlap the subject vehicle position mark 111, the non-subject vehicle position marks 211a through 211d are displayed at positions offset from the initial non-subject vehicle positions 210a through 210d as described above.

Next, the example presented in FIG. 4B is explained. In this example, a method for determining moving directions and moving distances for non-subject vehicle position marks 211e, 211f, and 211g corresponding to non-subject vehicle positions 210e, 210f, and 210g within the proximity decision-making range 113 is explained.

In FIG. 4B, the subject vehicle position mark 111 is displayed in correspondence to the subject vehicle position 110 and the proximity decision-making range 113 is set in correspondence to the subj ect vehicle position mark 111. Under the circumstances illustrated in FIG. 4B, themovingdirections and the moving distances for the non-subject vehicle position marks 211e through 211g are determined as described in reference to FIG. 4A. Namely, straight lines each connecting the subject vehicle position 110 with a specific non-subject vehicle position among the non-subject vehicle positions 210e through 210g are drawn on the map and the directions along which the individual straight lines extend are designated as the moving directions for the non-subject vehicle position marks 211e through 211g. In addition, the distances from the non-subject vehicle positions 210e through 210g to the outer periphery of the proximity decision-making range 113 along these moving directions are designated as the moving distances for the non-subject vehicle position marks 211e through 211g. Through this operation, the moving directions and the moving distances for the non-subject vehicle position marks 211e through 211g are determined.

Once the moving directions and the moving distances for the non-subject vehicle position marks 211e through 211g are determined as described above, the non-subject vehicle positions 210e through 210g are moved, as shown in FIG. 4B in step S90. Then, the non-subject vehicle position marks 211e through 211g are displayed on the map in correspondence to the non-subject vehicle positions 210e through 210g having been moved. By doing this, the non-subject vehicle position marks 211e through 211g are displayed at positions offset from the initial non-subject vehicle positions 210e through 210d. The example illustrated in FIG. 4B differs from that in FIG. 4A in that the non-subj ect vehicle position marks 211e through 211g displayed at offset positions still partially overlap the subject vehicle position mark 111.

It is to be noted that the moving distances for the non-subject vehicle position marks 211a through 211d and the non-subject vehicle position marks 211e through 211g determined as described above change respectively in correspondence to the areas of the proximity decision-making range 112 and the proximity decision-making range 113. The areas of the proximity decision-making ranges 112 and 113 are set based upon the map scaling factor and the size of the subject vehicle position mark 111 on the screen as explained earlier. This means that the moving distances for the non-subject vehicle position marks 211a through 211d and the non-subject vehicle position marks 211e through 211g are determined in correspondence to the map scaling factor and the size of the subject vehicle position mark 111 displayed on the screen.

It is to be noted that the method for determining the moving directions and the moving distances for non-subject vehicle position marks as described above simply represents an example. In other words, the moving direction and moving distance for a non-subject vehicle position mark may be determined through a method other than that described above.

A plurality of non-subject vehicle position marks displayed at offset positions as described above may overlap in the display screen. Under such circumstances, the plurality of overlapping non-subject vehicle position marks may be displayed at the overlapping positions. Alternatively, some of or all of the overlapping non-subj ect vehicle position marks may be further offset by taking into consideration the initial positional relationship.

In addition, a non-subject vehicle position mark displayed at an offset position may take up the same position as another non-subject vehicle position mark displayed in correspondence to a non-subject vehicle position outside the proximity decision-making range. In such a case, one of the non-subject vehicle position marks should be displayed with an offset so as to clearly indicate the initial positional relationship between the two non-subject vehicle position marks.

The following advantages are achieved through the first embodiment described above.
(1) The navigation apparatus 10 detects the position of the subject vehicle 1 (step S10) through the processing executed by the control unit 101 and displays the subject vehicle position mark indicating the position of the subject vehicle 1 on the map on display at the display monitor 106 (step S20). It also obtains the position information indicating the position of the non-subject vehicle 2 (step S40), determines the position of the non-subject vehicle 2 based upon the obtained position information (step S50) and displays the non-subject vehicle position mark indicating the position of the non-subject vehicle position 2 on the map (step S90). At this time, it makes a decision as to whether or not the subject vehicle 1 and the non-subject vehicle 2 are in close proximity to each other (step S60) and if they are judged to be in close proximity to each other, it displays the non-subject vehicle position mark at a position offset from the actual position of the non-subject vehicle 2 in step S90. As a result, even when the subject vehicle and the non-subject vehicle are in close proximity to each other, the subject vehicle position mark and the non-subject vehicle position mark are not displayed at overlapping positions.
(2) The navigation apparatus 10 determines the moving direction and the moving distance so as to display the non-subject vehicle position mark at an offset position in step S90 based upon the positional relationship between the subject vehicle 1 and the non-subject vehicle 2 through processing executes by the control unit 101 (step S80). As a result, the non-subject vehicle position mark can be displayed at a position offset relative to the subject vehicle position mark in an optimal manner.
(3) In step S80, the control unit 101 designates the direction along which the straight line connecting the position of the subject vehicle 1 and the position of the non-subject vehicle 2 extends as the moving direction for the non-subj ect vehicle positionmark. Through this process, the optimal moving direction can be selected.
(4) In addition, the control unit 101 is able to determine in step S80 the moving directions and the moving distances for the non-subject vehicle position marks 211a through 211d so that the subject vehicle position mark 111 and the non-subject vehicle position marks 211a through 211d do not overlap each other, as shown in FIG. 4A. As a result, the positional relationships between the subject vehicle and the non-subject vehicles can be clearly indicated on the map.
(5) Furthermore, the control unit 101 determines in step S80 the moving distance for the non-subject vehicle position mark based upon the map scaling factor and the size of the subject vehicle position mark displayed on the screen. This allows the control unit to determine the optimal moving distance.
(6) The navigation apparatus 10 sets the proximity decision-making range to be used as a criterion when making a decision in step S60 as to whether or not the subject vehicle 1 and the non-subject vehicle 2 have moved close to each other based upon the map scaling factor and the size of the subject vehicle position mark displayed on the screen through processing executed by the control unit 101 (step S30). As a result, an accurate decision can be made in step S60 as to whether or not the subj ect vehicle and the non-subj ect vehicle are in close proximity to each other.
(7) The navigation apparatus 10 makes a decision as to whether or not the road on which the subject vehicle 1 is traveling and the road on which the non-subject vehicle 2 is traveling approach each other with a grade separation through the processing executed by the control unit 101 (step S70). If it is decided in step S60 that the subject vehicle 1 and the non-subject vehicle 2 are in close proximity to each other and it is decided in step S70 that the road on which the subject vehicle 1 is traveling and the road on which the non-subject vehicle 2 is traveling approach each other with a grade separation, the operation proceeds to step S90 without executing step S80 to display the non-subject vehicle position mark in correspondence to the actual position of the non-subj ect vehicle 2. Since the subj ect vehicle position mark and the non-subject vehicle position mark can be displayed at overlapping positions as long as the road on which the subject vehicle is traveling and the road on which the non-subject vehicle is traveling approach each other with a grade separation, the non-subj ect vehicle position mark is displayed without an offset.
(8) In step S40, the control unit 101 obtains the position information indicating the position of the non-subj ect vehicle 2 through vehicle-to-vehicle communication carried out between the subject vehicle 1 and the non-subject vehicle 2. Through the vehicle-to-vehicle communication, the,position information accurately indicating the position of the non-subject vehicle can be obtained with ease.
(9) Under circumstances in which the subject vehicle position mark 111 and the non-subject vehicle position mark 211 would take up positions overlapping each other, the non-subject vehicle position mark 211 is displayed at an offset position, as shown in FIG. 5B. Through these measures, even when the subj ect vehicle and the non-subj ect vehicle have moved close to each other, the subject vehicle position mark and the non-subject vehicle position mark are not displayed at overlapping positions.

### - Second Embodiment -

Next, the second embodiment of the present invention is described. In the first embodiment explained earlier, the position information is exchanged by the subject vehicle and the non-subject vehicle through vehicle-to-vehicle communication. In the second embodiment, the position information is exchanged by the subject vehicle and the non-subject vehicle via a distribution center.

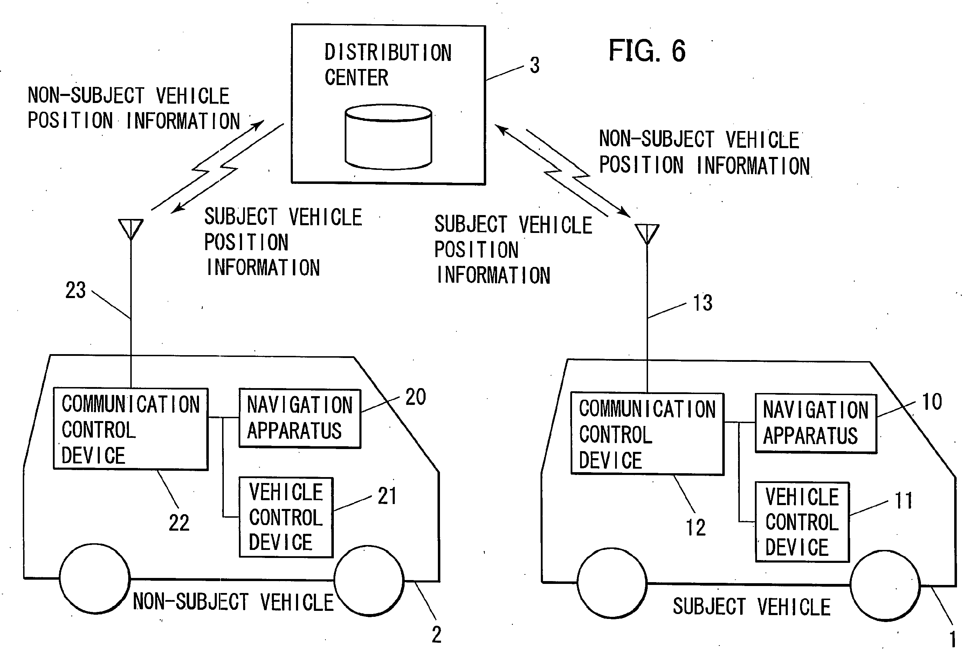

FIG. 6 shows the configuration of the vehicle control system achieved in the second embodiment. As does the vehicle control system achieved in the first embodiment shown in FIG. 1, this vehicle control system includes a subject vehicle 1, equipped with a navigation apparatus 10, a vehicle control device 11, a communication control device 12 and an antenna 13, and a non-subject vehicle 2, equipped with a navigation apparatus 20, a vehicle control device 21, a communication control device 22 and an antenna 23. The vehicle control system further includes a distribution center 3.

The communication control device 12 is connected with the distribution center 3 through wireless communication in the embodiment. Such wireless communication may be achieved through a mobile communication network for, for instance, portable telephones. The distribution center 3 provides a service of collecting the position information indicating the positions of vehicles traveling in different regions of the country and transmitting this position information to individual subject vehicles as non-subject vehicle position information. Namely, as the communication control device 12 becomes connected with the distribution center 3, the subject vehicle position information is transmitted from the communication control device 12 to the distribution center 3 and the distribution center 3, in turn, transmits non-subject vehicle position information it has collected to the communication control device 12. This non-subject vehicle position information initially transmitted from the communication control device 22 of the non-subject vehicle 2, has been collected at the distribution center 3.

As the non-subject vehicle position information is transmitted to the communication control device 12 at the subject vehicle 1 from the distribution center 3, as described above, the non-subject vehicle position information is taken into the communication control device 12. Likewise, as the subject vehicle position information is transmitted from the distribution center 3 to the communication control device 22 at the non-subject vehicle 2, the communication control device 22 takes in the subject vehicle position information. The subject vehicle 1 and the non-subject vehicle 2 exchange position information indicating their positions via the distribution center 3 through this process.

The non-subject vehicle position information obtained at the communication control device 12 is then output to the navigation apparatus 10 from the communication control device 12. Based upon the non-subject vehicle position information, the navigation apparatus 10 and the vehicle control device 11 each execute processing similar to that explained in reference to the first embodiment.

It is to be noted that the control unit 101 in the navigation apparatus 10 in the embodiment executing the processing in the flowchart presented in FIG. 3 obtains the non-subject vehicle position information in step S40 as described above. Namely, it obtains the position information indicating the position of the non-subject vehicle 2 from the distribution center 3 connected through wireless communication.

The following advantages are achieved through the second embodiment described above.
(1) In step S40, a control unit 101 of the navigation apparatus 10 obtains the position information indicating the position of the non-subject vehicle 2 from the distribution center 3. This system enables the control unit to obtain position information indicating the position of the non-subject vehicle even when the distance between the subj ect vehicle and the non-subject vehicle is large and vehicle-to-vehicle communication cannot be executed.
(2) The communication control device 12 transmits the position information indicating the position of the subject vehicle 1 to the distribution center 3. Thus, the position information indicating the positions of various vehicles can be collected at the distribution center 3.

It is to be noted that the first embodiment and the second embodiment described above may be adopted in combination. For instance, as long as vehicle-to-vehicle communication can be carried out by the subj ect vehicle 1 and the non-subj ect vehicle 2, the subject vehicle 1 and the non-subject vehicle 2 may exchange position information through vehicle-to-vehicle communication as in the first embodiment. However, if the distance between the subject vehicle 1 and the non-subject vehicle 2 is large enough to prevent vehicle-to-vehicle communication, the subject vehicle 1 and the non-subject vehicle 2 may exchange position information via the distribution center 3, as in the second embodiment. Through this combination, it is ensured that the subject vehicle obtains the non-subject vehicle position information with a high level of reliability.

While an explanation is given above in reference to the embodiments on an example in which the map is displayed at the navigation apparatus, the present invention is not limited to this example and it may be adopted in any of various types of on-vehicle map display systems. In addition, while the present invention is adopted in vehicle control systems in the embodiments described above, the present invention is not limited to these examples and it may be adopted in any of various types of automotive map display systems.

The above features and embodiments can be combined in any way partly or as a whole.

## Claims

1. An on-vehicle map display apparatus (10) comprising:
a map display control means (101) for displaying a map at a display monitor (106);
a subject vehicle position detection means (101) for detecting a position of a subject vehicle (1);
a subject vehicle position display control means (101) for displaying on the map a subject vehicle position mark (111) indicating the position of the subject vehicle detected by the subject vehicle position detection means;
a non-subject vehicle position information acquisition means (101) for obtaining position information of anon-subject vehicle (2);
a non-subject vehicle position determining means (101) for determining the position of the non-subj ect vehicle based upon the position information of the non-subject vehicle obtained by the non-subject vehicle position information acquisition means;
a non-subject vehicle position display control means (101) for displaying on the map a non-subject vehicle position mark (211) indicating the position of the non-subject vehicle determined by the non-subject vehicle position determining means; and
a proximity decision-making means (101) for making a decision as to whether or not the subject vehicle and the non-subject vehicle are in close proximity to each other, wherein:
if the proximity decision-making means determines that the subject vehicle and the non-subject vehicle are in close proximity to each other, the non-subject vehicle position display control means displays the non-subject vehicle position mark at a position offset from the position of the non-subject vehicle determined by the non-subject vehicle position determining means.

2. An on-vehicle map display apparatus according to claim 1, further comprising:
a moving direction and moving distance determining means (101) for determining a moving direction along which the non-subject position mark is to be offset and a moving distance over which the non-subject position mark is to be offset by the non-subject vehicle position display control means based upon a positional relationship between the subject vehicle and the non-subject vehicle.

3. An on-vehicle map display apparatus according to claim 2, wherein:
the moving direction and moving distance determining means designates a direction along which a straight line connecting the position of the subj ect vehicle and the position of the non-subject vehicle extends as the moving direction.

4. An on-vehicle map display apparatus according to claim 2 or claim 3, wherein:
the moving direction and moving distance determining means determines the moving direction and the moving distance so that the subject vehicle position mark and the non-subject vehicle position mark are not displayed at overlapping positions.

5. An on-vehicle map display apparatus according to any one of claims 2 through 4, wherein:
the moving direction and moving distance determining means determines the moving distance based upon a scaling factor of the map and a size of the subject vehicle position mark displayed on a screen.

6. An on-vehicle map display apparatus according to any one of claims 1 through 5, further comprising:
a setting means (101) for setting a proximity decision-making range by which the proximity decision-making means makes a decision as to whether or not the subject vehicle and the non-subject vehicle are in close proximity to each other based upon a scaling factor of the map and a size of the subject vehicle position mark displayed on a screen.

7. An on-vehicle map display apparatus according to any one of claims 1 through 6, further comprising:
a grade separation decision-making means (101) for making a decision as to whether or not a road on which the subj ect vehicle is traveling and a road on which the non-subj ect vehicle is traveling approach each other with a grade separation, wherein:
when the proximity decision-making means determines that the subject vehicle and the non-subject vehicle are in close proximity to each other and the grade separation decision-making means determines that the road on which.the subject vehicle is traveling and the road on which the non-subject vehicle is traveling approach each other with a grade separation, the non-subject vehicle position display control means displays the non-subject vehicle position mark in correspondence to the position of the non-subject vehicle determined by the non-subject vehicle position determining means.

8. An on-vehicle map display apparatus according to any one of claims 1 through 7, wherein:
the non-subject vehicle position information acquisition means obtains the position information of the non-subject vehicle through communication carried out between the subject vehicle and the non-subject vehicle.

9. An automotive map display system comprising:
an on-vehicle map display apparatus (10) according to any one of claims 1 through 8; and
a distribution center (3) connected with the on-vehicle map display apparatus through wireless communication, wherein:
the non-subject vehicle position information acquisition means obtains the position information of the non-subject vehicle from the distribution center.

10. An automotive map display system according to claim 9, further comprising:
a communication control device (12) that transmits position information of the subj ect vehicle to the distribution center.

11. An on-vehicle map display apparatus (10) that displays a map at a display monitor (106) and displays a subject vehicle position mark (111) indicating a position of a subject vehicle (1) and a non-subject vehicle position mark (211) indicating a position of a non-subject vehicle (2) on the map, wherein':
if the subject vehicle position mark and the non-subject vehicle position mark would occupy overlapping positions, the non-subject vehicle position mark is displayed at an offset position.
